# EUROPEAN PATENT APPLICATION

(11) **EP 2 816 809 A2**
(43) Date of publication of application: **24.12.2014**
(21) Application number: 14181462.4
(22) Date of filing: 19.05.2008
(51) Int. Cl.: H04N 21/2343, H04N 21/258

(54) **Systems and methods for personalizing an interactive media guidance application**

(30) Priority: 31.05.2007 US 809341
(62) Divisional of application: 12165218.4
(71) Applicant: United Video Properties, Inc., Santa Clara, CA 95050 (US)
(72) Inventor: Archer, Kuan, Hidalgo, Los Angeles, CA California 90049 (US); Olague, Craig, Alan, Moorpark, CA California 93021 (US); Strader, Christopher, Valencia, CA California 91354 (US)
(74) Representative: Korenberg, Alexander Tal

(57) **Abstract**

Systems and methods are provided for the personalization of an interactive media guidance application based on recording-related actions performed by at least one of a first user equipment device and a second user equipment device in a media network. For example, a central data system is used to receive information from the first user equipment device indicating a first action associated with recording a program. The central data system is also adapted to receive information from the second user equipment device indicating a second action associated with recording a program. Subsequently, the system generates a profile based on the received information from the first and second user equipment devices and personalizes an interactive media guidance application implemented on the first and second user equipment devices based on the generated profile.

## Description

### Background of the Invention

The invention relates to personalizing interactive media guidance applications implemented on multiple user equipment devices based on recording-related actions performed on these devices. The invention also relates to the centralized management of recording histories associated with the user equipment devices.

The amount of media available to users in any given media delivery system can be substantial. Consequently, many users desire a form of media guidance through an interface that allows users to efficiently navigate media selections and easily identify media that they may desire. An application which provides such guidance is referred to herein as an interactive media guidance application or, sometimes, a media guidance application or a guidance application.

Interactive media guidance applications may take various forms depending on the media for which they provide guidance. One typical type of media guidance application is an interactive television program guide. Interactive television program guides (sometimes referred to as electronic program guides) are well-known guidance applications that, among other things, allow users to navigate among and locate many types of media content including conventional television programming (provided via traditional broadcast, cable, satellite, Internet, or other means), as well as pay-per-view programs, on-demand programs (as in video-on-demand (VOD) systems), Internet content (e.g., streaming media, downloadable media, Webcasts, etc.), and other types of media or video content. Guidance applications also allow users to navigate among and locate content related to the video content including, for example, video clips, articles, advertisements, chat sessions, games, etc.

With the advent of the Internet, mobile computing, and high-speed wireless networks, users are accessing media on personal computers (PCs) and other devices on which they traditionally did not, such as hand-held computers, personal digital assistants (PDAs), mobile telephones, or other mobile devices. On these devices users are able to navigate among and locate the same media available through a television. Consequently, media guidance is necessary on these devices, as well. The guidance provided may be for media content available only through a television, for media content available only through one or more of these devices, or for media content available both through a television and one or more of these devices. The media guidance applications may be provided as online applications (i.e., provided on a web-site), or as stand-alone applications or clients on hand-held computers, PDAs, mobile telephones, or other mobile devices.

The media guidance applications implemented on such devices may be personalized based on the user's preferences. A personalized media guidance application allows a user to, for example, customize displays and features to create a personalized "experience" with the media guidance application. A media guidance application may also be personalized to recommend to the user media content that is of interest to the user.

Interactive media guidance applications may be personalized based on, for example, monitored user interactions (i.e., the user's interactions may be derived by the application), user indications of interest, or a combination of the two. One good indication of a user's interests is a user's recording-related action. For example, a user's recording of a program may suggest that the user is interested in the program. Or, as another example, a user deleting an automatically recorded program without watching it may suggest that the user is not interested in the program.

When a user employs multiple devices, each device becomes a potential source of recording-related information. Thus, it would be desirable to personalize the media guidance applications implemented on each of the user's various devices based on the user's recording-related actions on all the devices.

### Summary of the Invention

In accordance with the principles of the present invention, methods and systems for the personalization of interactive media guidance applications implemented on user equipment devices based on recording-related actions are provided.

A user's media network may include one or more user equipment devices. Each device may have an interactive media guidance application through which the user may access desired media content. In some embodiments, a central data management system stores information that tracks recording-related actions performed by the multiple user equipment devices. A recording-related action includes, for example, scheduling a recording of a program, recording a program, or deleting a recording of a program. The central management system is also adapted to track device information related to the multiple user equipment devices. Consequently, the central data management system may automatically create a profile based on the tracked recording and device information. This profile may be used to identify media content of interest to the user and recommend the identified content through the media guidance applications of the media network.

Methods and systems are also provided for personalizing interactive media guidance applications of the media network based on the profile information stored in the central management system. Personalization of the interactive media guidance applications may include, for example, providing a targeted advertisement to the user or recommending media content of potential interest to the user. In certain implementations, the recommended media content is content the user has not watched on any of the user equipment devices.

Methods and systems are additionally provided for automatically delivering media content and media guidance applications to the user in a format that is compatible with the capabilities of the user equipment devices from which the content data and the applications are accessed. For example, the display of an interactive media guidance application or a recommended content item may be dependent on whether the user's device is a personal computer, a mobile phone, an automotive entertainment system, a television, a set-top box, a DVR, or a portable media player. This type of device-specific personalization may be implemented using the profile information stored in the central data management system. The automatic delivery of media and media-related data to a user in a format that is compatible with the capabilities of the user equipment devices are discussed in greater detail in connection with Starkenburg et al., U.S. Patent Application No. 11/541,245, filed on September 29, 2006, which is hereby incorporated by reference herein in its entirety.

### Brief Description of the Figures

Further features of the invention, its nature and various advantages will be more apparent from the accompanying drawings and the following detailed description.
FIG. 1 shows an illustrative user equipment device in accordance with one embodiment of the present invention.
FIG. 2 shows an illustrative media network system in accordance with one embodiment of the present invention.
FIG. 3 shows an illustrative data structure used to transmit information from a user equipment device and a central data management system in accordance with one embodiment of the present invention.
FIG. 4 shows an illustrative configuration of a central data management system in accordance with one embodiment of the present invention.
FIG. 5 shows an illustrate interface data structure in accordance with one embodiment of the present invention.
FIG. 6 shows an illustrative user media network information data structure in accordance with one embodiment of the present invention.
FIG. 7 shows an illustrative profile information data structure in accordance with one embodiment of the present invention.
FIG. 8 shows an illustrative media guidance application in a grid display in accordance with one embodiment of the present invention.
FIG. 9 shows an illustrate recording history display screen in accordance with one embodiment of the present invention.
FIG. 10 shows an illustrative media content recommendation display screen in accordance with one embodiment of the present invention.
FIG. 11 shows another illustrative media content recommendation display screen in accordance with one embodiment of the present invention.
FIG. 12 shows an illustrative media guidance application in a video mosaic display in accordance with one embodiment of the present invention.
FIG. 13 shows an illustrative flow diagram for providing recording-related data from a user's user equipment device to a central data management system in accordance with the present invention.
FIG. 14 shows an illustrative flow diagram for providing personalized data to a user equipment device in accordance with the present invention.
FIG. 15 shows another illustrative flow diagram for providing personalized data to a user equipment device in accordance with the present invention.
FIG. 16 shows yet another illustrative flow diagram for providing personalized data to a user equipment device in accordance with the present invention.

### Detailed Description of Various Embodiments

The present invention provides systems and methods for personalizing media guidance applications based on recording-related actions performed by a user on multiple user equipment devices of a user's media network.

A recording-related action, as referred to herein, may be an action performed by a user in association with a program being recorded or a recorded program. For example, a recording-related action may comprise a user initiating a recording of a program, playing back a recording of a program, deleting a recording of a program, or stopping a recording of a program.

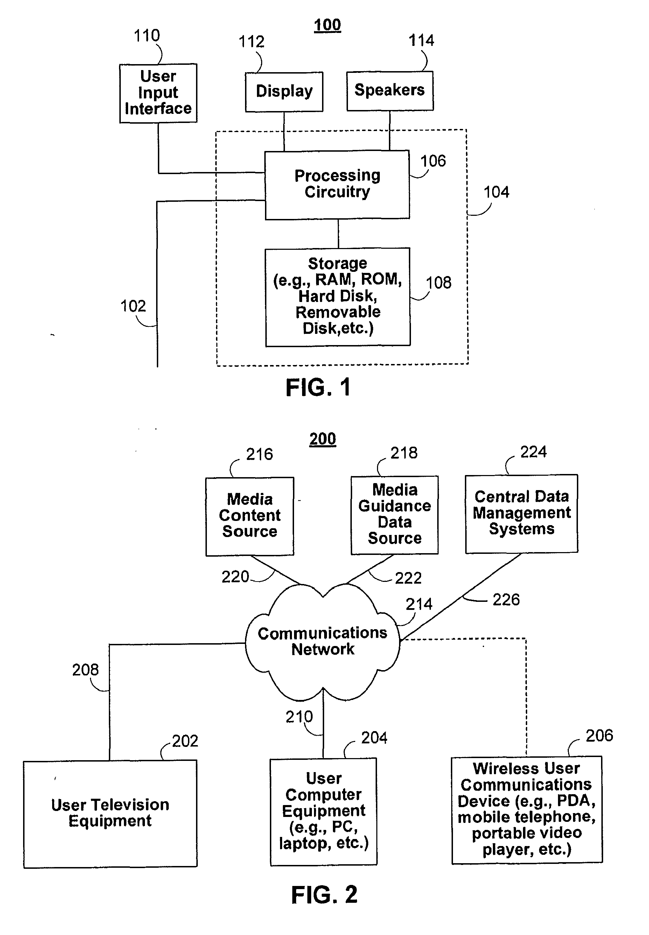

A user may use multiple user equipment devices, for example a television, a cell-phone and a portable media player, to access media content through media guidance applications implemented on the various devices. The multiple user equipment devices may be suitably configured to form a media network. Details regarding a user's media network and user equipment devices are described below with reference to FIGS. 1 and 2.

In particular, FIG. 1 shows a generalized embodiment of illustrative user equipment device 100. More specific implementations of user equipment devices are discussed below in connection with FIG. 2. User equipment device 100 may receive media content and data via input/output (hereinafter "I/O") path 102. I/O path 102 may provide media content (e.g., broadcast programming, on-demand programming, Internet content, and other video or audio) and data to control circuitry 104, which includes processing circuitry 106 and storage 108. Control circuitry 104 may be used to send and receive commands, requests, and other suitable data using I/O path 102. I/O path 102 may connect control circuitry 104 (and specifically processing circuitry 106) to one or more communications paths (described below). I/O functions may be provided by one or more of these communications paths, but are shown as a single path in FIG. 1 to avoid overcomplicating the drawing.

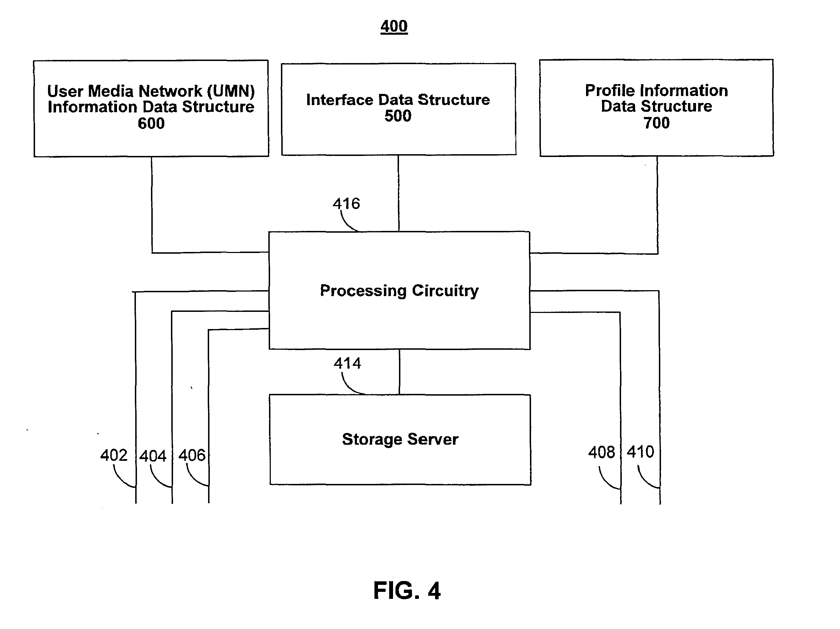

Control circuitry 104 may be based on any suitable processing circuitry 106 such as processing circuitry based on one or more microprocessors, microcontrollers, digital signal processors, programmable logic devices, etc. In some embodiments, control circuitry 104 executes instructions for a media guidance application stored in memory (i.e., storage 108). In client-server based embodiments, control circuitry 104 may include communications circuitry suitable for communicating with a guidance application server or other networks or servers such as a server on which a central data management system 224, as depicted in FIG. 2, is implemented to monitor recording-related actions performed on the user equipment device 100. Details regarding central data management system 224 will be described below. Communications circuitry may include a cable modem, an integrated services digital network (ISDN) modem, a digital subscriber line (DSL) modem, a telephone modem, or a wireless modem for communications with other equipment. Such communications may involve the Internet or any other suitable communications networks or paths (which is described in more detail in connection with FIG. 4). In addition, communications circuitry may include circuitry that enables peer-to-peer communication of user equipment devices, or communication of user equipment devices in locations remote from each other (described in more detail below).

Memory (e.g., random-access memory, read-only memory, or any other suitable memory), hard drives, optical drives, or any other suitable fixed or removable storage devices (e.g., DVD recorder, CD recorder, video cassette recorder, or other suitable recording device) may be provided as storage 108 that is part of control circuitry 104. Storage 108 may include one or more of the above types of storage devices. For example, user equipment device 100 may include a hard drive for a DVR (sometimes called a personal video recorder, or PVR) and a DVD recorder as a secondary storage device. Storage 108 may be used to store various types of media described herein and guidance application data, including program information, guidance application settings, user preferences or profile information, or other data used in operating the guidance application. Nonvolatile memory may also be used (e.g., to launch a boot-up routine and other instructions).

Control circuitry 104 may include video generating circuitry and tuning circuitry, such as one or more analog tuners, one or more MPEG-2 decoders or other digital decoding circuitry, high-definition tuners, or any other suitable tuning or video circuits or combinations of such circuits. Encoding circuitry (e.g., for converting over-the-air, analog, or digital signals to MPEG signals for storage) may also be provided. Control circuitry 104 may also include scaler circuitry for upconverting and downconverting media into the preferred output format of the user equipment 100. Circuitry 104 may also include digital-to-analog converter circuitry and analog-to-digital converter circuitry for converting between digital and analog signals. The tuning and encoding circuitry may be used by the user equipment to receive and to display, to play, or to record media content. The tuning and encoding circuitry may also be used to receive guidance data. The circuitry described herein, including for example, the tuning, video generating, encoding, decoding, scaler, and analog/digital circuitry, may be implemented using software running on one or more general purpose or specialized processors. Multiple tuners may be provided to handle simultaneous tuning functions (e.g., watch and record functions, picture-in-picture (PIP) functions, multiple-tuner recording, etc.). If storage 108 is provided as a separate device from user equipment 100, the tuning and encoding circuitry (including multiple tuners) may be associated with storage 108.

A user may control the control circuitry 104 using user input interface 110. User input interface 110 may be any suitable user interface, such as a remote control, mouse, trackball, keypad, keyboard, touch screen, touch pad, stylus input, joystick, voice recognition interface, or other user input interfaces. Display 112 may be provided as a stand-alone device or integrated with other elements of user equipment device 100. Display 112 may be one or more of a monitor, a television, a liquid crystal display (LCD) for a mobile device, or any other suitable equipment for displaying visual images. In some embodiments, display 112 may be HDTV-capable. Speakers 114 may be provided as integrated with other elements of user equipment device 100 or may be stand-alone units. The audio component of videos and other media content displayed on display 112 may be played through speakers 114. In some embodiments, the audio may be distributed to a receiver (not shown), which processes and outputs the audio via speakers 114.

User equipment device 100 of FIG. 1 can be implemented in system 200 of FIG. 2 as user television equipment 202, user computer equipment 204, wireless user communications device 206, or any other type of user equipment suitable for accessing media, such as a non-portable gaming machine. For simplicity, these devices may be referred to herein collectively as user equipment or user equipment devices. User equipment devices, on which a media guidance application is implemented, may function as a standalone device or may be part of a network of devices. Various network configurations of devices may be implemented and are discussed in more detail below.

User television equipment 202 may include a set-top box, an integrated receiver decoder (IRD) for handling satellite television, a television set, a digital storage device, a DVD recorder, a video-cassette recorder (VCR), a local media server, or other user television equipment. One or more of these devices may be integrated to be a single device, if desired. User computer equipment 204 may include a PC, a laptop, a tablet, a WebTV box, a personal computer television (PC/TV), a PC media server, a PC media center, or other user computer equipment. WEBTV is a trademark owned by Microsoft Corp. Wireless user communications device 206 may include PDAs, a mobile telephone, a portable video player, a portable music player, a portable gaming machine, or other wireless devices.

It should be noted that with the advent of television tuner cards for PC's, WebTV, and the integration of video into other user equipment devices, the lines have become blurred when trying to classify a device as one of the above devices. In fact, each of user television equipment 202, user computer equipment 204, and wireless user communications device 206 may utilize at least some of the system features described above in connection with FIG. 1 and, as a result, include flexibility with respect to the type of media content available on the device. For example, user television equipment 202 may be Internet-enabled allowing for access to Internet content, while user computer equipment 204 may include a tuner allowing for access to television programming. The media guidance application may also have the same layout on the various different types of user equipment or may be tailored to the display capabilities of the user equipment. For example, on user computer equipment, the guidance application may be provided as a web site accessed by a web browser. In another example, the guidance application may be scaled down for wireless user communications devices.

In system 200, there is typically more than one of each type of user equipment device but only one of each is shown in FIG. 2 to avoid overcomplicating the drawing. In addition, each user may utilize more than one type of user equipment device (e.g., a user may have a television set and a computer) and also more than one of each type of user equipment device (e.g., a user may have a PDA and a mobile telephone and/or multiple television sets).

The user may also set various settings to maintain consistent media guidance application settings across in-home devices and remote devices. Settings include those described herein, as well as channel and program favorites, programming preferences that the guidance application utilizes to make programming recommendations, display preferences, and other desirable guidance settings. For example, if a user sets a channel as a favorite on, for example, the web site www.tvguide.com on their personal computer at their office, the same channel would appear as a favorite on the user's in-home devices (e.g., user television equipment and user computer equipment) as well as the user's mobile devices, if desired. Therefore, changes made on one user equipment device can change the guidance experience on another user equipment device, regardless of whether they are the same or a different type of user equipment device. In addition, the changes made may be based on settings input by a user, as well as user activity monitored by the guidance application.

The user equipment devices may be coupled to communications network 214. Namely, user television equipment 202, user computer equipment 204, and wireless user communications device 206 are coupled to communications network 214 via communications paths 208, 210, and 212, respectively. Communications network 214 may be one or more networks including the Internet, a mobile phone network, mobile device (e.g., Blackberry) network, cable network, public switched telephone network, or other types of communications network or combinations of communications networks. BLACKBERRY is a service mark owned by Research In Motion Limited Corp. Paths 208, 210, and 212 may separately or together include one or more communications paths, such as, a satellite path, a fiber-optic path, a cable path, a path that supports Internet communications (e.g., IPTV), free-space connections (e.g., for broadcast or other wireless signals), or any other suitable wired or wireless communications path or combination of such paths. Path 212 is drawn with dotted lines to indicate that in the exemplary embodiment shown in FIG. 2 it is a wireless path and paths 208 and 210 are drawn as solid lines to indicate they are wired paths (although these paths may be wireless paths, if desired). Communications with the user equipment devices may be provided by one or more of these communications paths, but are shown as a single path in FIG. 2 to avoid overcomplicating the drawing.

Although communications paths are not drawn between user equipment devices, these devices may communicate directly with each other via communication paths, such as those described above in connection with paths 208, 210, and 212, as well other short-range point-to-point communication paths, such as USB cables, IEEE 1394 cables, wireless paths (e.g., Bluetooth, infrared, IEEE 802-11x, etc.), or other short-range communication via wired or wireless paths. BLUETOOTH is a certification mark owned by Bluetooth SIG, INC. The user equipment devices may also communicate with each other directly through an indirect path via communications network 214.

System 200 includes media content source 216, media guidance data source 218, and central data management system 224 coupled to communications network 214 via communication paths 220, 222 and 226, respectively. Paths 220, 222 and 226 may include any of the communication paths described above in connection with paths 208, 210, and 212. Communications with the media content source 216, media guidance data source 218 and central data management system 224 may be exchanged over one or more communications paths, but are shown as a single path in FIG. 2 to avoid overcomplicating the drawing. In addition, there may be more than one of each of media content source 216, media guidance data source 218 and central data management system 224 but only one of each is shown in FIG. 2 to avoid overcomplicating the drawing. (The different types of each of these sources are discussed below.) If desired, media content source 216 and media guidance data source 218 may be integrated as one source device. If desired, central data management system 224 may be integrated with at least one of media content source 216 and media guidance data source 218. Although communications between media content source 216, media guidance data source 218 and central management system 224 with user equipment devices 202, 204, and 206 are shown as through communications network 214, in some embodiments, sources 216 and 218 and system 224 may communicate directly with user equipment devices 202, 204, and 206 via communication paths (not shown) such as those described above in connection with paths 208, 210, and 212.

Media content source 216 may include one or more types of media distribution equipment including a television distribution facility, cable system headend, satellite distribution facility, programming sources (e.g., television broadcasters, such as NBC, ABC, HBO, etc.), intermediate distribution facilities and/or servers, Internet providers, on-demand media servers, and other media content providers. NBC is a trademark owned by the National Broadcasting Company, Inc., ABC is a trademark owned by the ABC, INC., and HBO is a trademark owned by the Home Box Office, Inc. Media content source 216 may be the originator of media content (e.g., a television broadcaster, a Webcast provider, etc.) or may not be the originator of media content (e.g., an on-demand media content provider, an Internet provider of video content of broadcast programs for downloading, etc.). Media content source 216 may include cable sources, satellite providers, on-demand providers, Internet providers, or other providers of media content. Media content source 216 may also include a remote media server used to store different types of media content (including video content selected by a user), in a location remote from any of the user equipment devices. Systems and methods for remote storage of media content, and providing remotely stored media content to user equipment are discussed in greater detail in connection with Ellis et al., U.S. Patent Application No. 09/332,244, filed June 11, 1999, which is hereby incorporated by reference herein in its entirety.

Media guidance data source 218 may provide media guidance data, such as media listings, media-related information (e.g., broadcast times, broadcast channels, media titles, media descriptions, ratings information (e.g., parental control ratings, critic's ratings, etc.), genre or category information, actor information, logo data for broadcasters' or providers' logos, etc.), media format (e.g., standard definition, high definition, etc.), advertisement information (e.g., text, images, media clips, etc.), on-demand information, and any other type of guidance data that is helpful for a user to navigate among and locate desired media selections.

Media guidance application data may be provided to the user equipment devices using any suitable approach. In some embodiments, the guidance application may be a stand-alone interactive television program guide that receives program guide data via a data feed (e.g., a continuous feed, trickle feed, or data in the vertical blanking interval of a channel). Program schedule data and other guidance data may be provided to the user equipment on a television channel sideband, in the vertical blanking interval of a television channel, using an in-band digital signal, using an out-of-band digital signal, or by any other suitable data transmission technique. Program schedule data and other guidance data may be provided to user equipment on multiple analog or digital television channels. Program schedule data and other guidance data may be provided to the user equipment with any suitable frequency (e.g., continuously, daily, a user-specified period of time, a system-specified period of time, in response to a request from user equipment, etc.). In some approaches, guidance data from media guidance data source 218 may be provided to users' equipment using a client-server approach. For example, a guidance application client residing on the user's equipment may initiate sessions with source 218 to obtain guidance data when needed. Media guidance data source 218 may provide user equipment devices 202, 204, and 206 the media guidance application itself or software updates for the media guidance application.

Media guidance applications may be, for example, stand-alone applications implemented on user equipment devices. In other embodiments, media guidance applications may be client-server applications where only the client resides on the user equipment device. For example, media guidance applications may be implemented partially as a client application on control circuitry 104 of user equipment device 100 and partially on a remote server as a server application (e.g., media guidance data source 218). The guidance application displays may be generated by the media guidance data source 218 and transmitted to the user equipment devices. The media guidance data source 218 may also transmit data for storage on the user equipment, which then generates the guidance application displays based on instructions processed by control circuitry.

Central data management system 224 is configured to track recording-related actions performed by multiple user equipment devices 202, 204, and 206 associated with the user's media network 200. In one implementation, central data management system 224 is implemented on a server, as illustrated in FIG. 2, that is apart from the servers or devices on which media content source 216 and media guidance data source 218 are stored. In another implementation, central data management 224 is implemented on the same server as media guidance data source 218 and/or media content source 216. In yet another implementation, central data management system 224 is implemented on multiple servers centrally accessible through communications network 214. The one or more servers on which data management system 224 is implemented are operative to synchronize with user equipment devices 202, 204 and 206 to obtain recording-related media content information and to process the received information for keeping system 224 up to date. In addition to storing media content information, central data management system 224 may also store device-specific information related to user equipment devices 202, 204 and 206 as well as profile information that is determined, for example, from the collected media content and device-specific information.

Central data management system 224 is also adapted to communicate with media guidance data source 218, media content source 216, and user equipment devices 202, 204 and 206. In one embodiment, system 224 transmits its stored user profile information to media guidance data source 218 for use by data source 218 to, for example, personalize media guidance information that is provided to user equipment devices 202, 204, and 206. In one embodiment, system 224 directly transmits its stored user profile information to user equipment devices 202, 204 and 206 for integration with local user profile information stored in the memory of each device. The updated local profile may be used by each device 202, 204 or 206 to personalize its media guidance application and recommend media content of potential interest to the user. In one embodiment, system 224 transmits its profile information to media content source 216 for use by source 216 to, for example, select media content for recommendation to user equipment devices 202, 204 and 206 and media guidance data source 218. In yet another embodiment, at least one of media content source 216, media guidance data source 218, and user equipment devices 202, 204, and 206 is able to transmit data to system 224 for media guidance personalization and preferred media content determination by data management system 224.

Media guidance system 200 is intended to illustrate a number of approaches, or network configurations, by which user equipment devices and sources of media content and guidance data as well as the central data management system may communicate with each other for the purpose of accessing media and providing media guidance. The present invention may be applied in any one or a subset of these approaches, or in a system employing other approaches for delivering media and providing media guidance. The following three approaches provide specific illustrations of the generalized example of FIG. 2.

In one approach, user equipment devices may communicate with each other within a home network. User equipment devices can communicate with each other directly via short-range point-to-point communication schemes describe above, via indirect paths through a hub or other similar device provided on a home network, or via communications network 214. Each of the multiple individuals in a single home may operate different user equipment devices on the home network. As a result, it may be desirable for various media guidance information or settings to be communicated between the different user equipment devices. For example, it may be desirable for users to maintain consistent media guidance application settings on different user equipment devices within a home network, as described in greater detail in Ellis et al., U.S. Patent Application No. 11/179,210, filed July 11, 2005. Different types of user equipment devices in a home network may also communicate with each other to transmit media content. For example, a user may transmit media content from user computer equipment to a portable video player or portable music player.

In a second approach, users may have multiple types of user equipment by which they access media content and obtain media guidance. Such interactions, especially recording-related interactions, may be monitored by the central data management system. For example, some users may have home networks that are accessed by in-home and mobile devices. Users may control in-home devices via a media guidance application implemented on a remote device. For example, users may access an online media guidance application on a website via a personal computer at their office, or a mobile device such as a PDA or web-enabled mobile telephone. The user may set various settings (e.g., recordings, reminders, or other settings) on the online guidance application to control the user's in-home equipment. The online guide may control the user's equipment directly, or by communicating with a media guidance application on the user's in-home equipment. Various systems and methods for user equipment devices communicating, where the user equipment devices are in locations remote from each other, is discussed in, for example, Ellis et al., U.S. Patent Application No. 10/927,814, filed August 26, 2004, which is hereby incorporated by reference herein in its entirety.

In a third approach, users of user equipment devices inside and outside a home can use their media guidance application to communicate directly with media content source 216 to access media content. Specifically, within a home, users of user television equipment 204 and user computer equipment 206 may access the media guidance application to navigate among and locate desirable media content. Users may also access the media guidance application outside of the home using wireless user communications devices 206 to navigate among and locate desirable media content. These interactions, especially recording-related interactions, may be monitored by the central data management system.

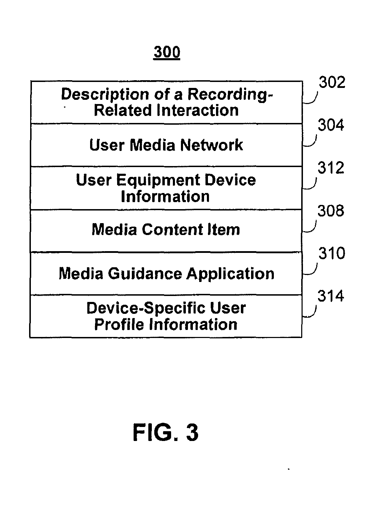

Having described an illustrative embodiment of a user equipment device 100 and an exemplary media network 200 that includes a central data management system 224, the central data management system 224 is described next in detail with reference to FIGS. 3-7.

FIG. 3 illustrates an exemplary recording-related information data structure 300 that is transmitted from a user equipment device to central data management system 224 of FIG. 2. Data structure 300 is configured to include field 302 for providing a description of a recording-related action performed by the user equipment device. Data structure 300 also includes fields 304 that stores names or any other identifiers for uniquely locating the user media network (UMN) from which data structure 300 is originated. Data structure 300 additionally include field 312 that provides information about the user equipment device such as device type, general device capabilities (i.e., display capabilities, power capabilities, storage capabilities, etc.), device name and device address or other identifiers of device location. Furthermore, data structure 300 includes fields 308 and 310 that provide identifications of a media content item and a media guidance application, respectively, associated with the recording-related interaction. The identification of the media content item may be a title of the content item or an address used to determine the content, for example, from media content source 216 of FIG. 2. The identification of the media guidance application may be an address used to identify the guidance application from media guidance data source 218 of FIG. 2. In certain embodiments, field 314 of data structure 300 may additionally include device-specific user profile information that is stored on the user equipment device. The device-specific user profile information includes, for example, personalization data set by the user to customize display screens, functions, menus, etc., of a media guidance application.

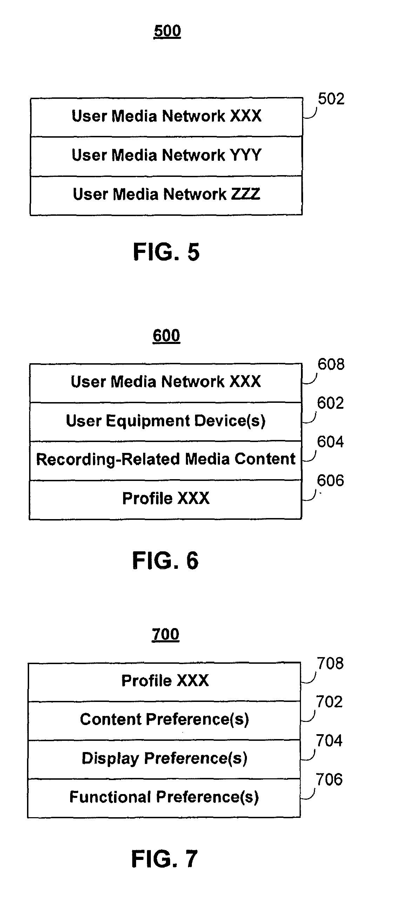

FIG. 4 provides an illustrative configuration 400 of central data management system 224 of FIG. 2. As depicted, central data management system 400 includes an interface data structure 500 that is used to store information associated with multiple user media networks (UMN) from which media information corresponding to different networks is gathered. Detail regarding data structure 500 is described below with reference to FIG. 5. Data management system 400 also includes a UMN information data structure 600 that stores recording-related media content information, device information, and profile information pertinent to each UMN listed in interface data structure 500. Details regarding UMN information data structure 600 is described below in reference to FIG. 6. Furthermore, data structure 400 includes a profile information data structure 700 that provides, for example, content preferences, display preferences, and functional preferences associated with each UMN. Hence, central data management system 400 may be viewed as an aggregation of media network accounts, where each account is adapted to provide a recording-related history and profile information associated with each network.

In addition, as illustrated in FIG. 4, central data management system 400 also includes I/O paths 402, 404 and 406 through which media network information from at least one of a media content source, a media guidance data source, and a user equipment device, respectively, may be supplied to the system. In addition, system 400 includes I/O path 410 that is used to transmit personalized media guidance data or media content recommendations from the system to other servers/devices. System 400 may generate the personalized media data based on the profile information stored therein. Alternatively, system 400 transmits the profile information to other servers/devices via I/O path 408 for off-site media data personalization. Details regarding media data personalization will be discussed below. Central data management system 400 may also include a storage server 414 having various types of storage devices implemented thereon and is configured to store a variety of media and media-related data, such as the data referred by data structures 500, 600 and 700. System 400 further includes processing circuitry 416, much like processing circuitry 106 of FIG. 1, that may be used to send and receive data via I/O paths 402, 404, 406, 408 and 410. Processing circuitry 416 provides such function by regulating flow of data between the various data structures and storage server 414, for example.

FIG. 5 illustrates an exemplary interface data structure 500 of central data management system 400 of FIG. 4 that is used to store information pertinent to a list of UMNs. In particular, the list of UMNs is stored in field 502 of data structure 500, and each UMN is identified by a name or any other identifier for uniquely locating the UMN. In one example, field 304 of data structure 300 (FIG. 3) transmits such identification data from a user equipment device of the UMN to data management system 400. In addition, the UMNs in field 502 may be organized in the form of a linked list of UMN identifiers, an array of UMN identifiers, a table of UMN identifiers, or other suitable organization scheme.

FIG. 6 illustrates an exemplary UMN information data structure 600 that is used to store recording-related media content information, device information and profile information corresponding to each UMN listed in field 502 of data structure 500. Thus, multiple instances of data structure 600, corresponding to different UMNs, may be required. For each instantiation of data structure 600, field 608 is provided to store a unique name, address, and/or identifier corresponding to a particular UMN. Field 602 of data structure 600 includes a list of user equipment devices (UED) in the UMN. Furthermore, each UED may be associated with a UED data structure for storing detailed information regarding the particular device. In one embodiment, the UED data structure includes information such as device type, device capabilities such as device display capabilities, device name, and device address or other identifiers of device location. For example, device type information associated with a user recording device may provide data such as the total and remaining storage space on the recording device, type of data recordings that may be recorded (e.g., digital or analog video or audio data), and quality of the recording. A UED data structure may additionally provide information regarding a device's availability including, for example, scheduling information on the device as well as an indication of the device's current availability. The device scheduling information may include data and commands used for scheduling functions on the device and a schedule of times when the device is scheduled to be available or not available. The indication of device's current availability may include information indicating whether the device is powered on, available to receive commands, or busy performing other functions. In certain embodiments, field 312 of data structure 300 (FIG. 3) transmits the above-described device information from the particular UED to central data system 400.

As illustrated in FIG. 6, data structure 600 is also configured to include a recording-related media content field 604 for storing a list of media content items recorded on all of the user equipment devices corresponding to a particular UMN. More specifically, each media content item may be associated with a media content data structure that provides information about the recorded media content such as the recording title, the media type, the content type and the recording quality. Additional information may be stored in the media content data structure such as the recording location, the recording time, and the storage device and location in memory on which the recording is stored. Furthermore, the media content data structure may store data that indicates the type of devices the recording may be displayed on. In certain embodiments, field 302 of data structure 300 (FIG. 3) transmits such recording-related media content information from a user equipment device, on which the recording-related action was performed, to central data system 400. This information may also be obtained based on central data management system 400 querying a media content source, such as media content source 216 of FIG. 2, using the media content name, address or other identifier provided in field 308 of data structure 300.

In one implementation of media content field 604, the recording-related content information stored therein is organized according to the type of device on which the content is displayed. For example, the information in field 604 may be organized as a first list of all recording-related media content that is viewable on a television and a second list including all recording-related media content viewable on a cellular phone. In another implementation, the content information in field 604 is organized according to the type of device on which the content may be stored. For example, the information in field 604 may be organized as a first list of all media content stored on a digital video recorder and a second list of all media content stored on a personal media player.

Again referring to FIG. 6, data structure 600 is further configured to include a profile information field 606 that establishes a profile associated with a particular UMN. The profile information is determined, for example, by analyzing the recording-related media content and device information stored in user equipment device information field 602 and recording-related media content information field 604, respectively. This profile may also be determined by incorporating with the device-specific profile information provided in field 314 of data structure 300 (FIG. 3). Furthermore, FIG. 7 illustrates an exemplary profile information data structure 700 that is configured to store the personalization information in field 606 of data structure 600. As depicted, data structure 700 that includes a field 702 for storing content preferences of the user, a field 704 for storing display preferences of the user, and a field 706 for storing functional preferences of the user. Profile information data structure 700 may also include a field 708 that stores a unique name, address, and/or identifier corresponding to the data structure 700.

In one embodiment of profile information data structure 700, content preference field 702 is adapted to store information regarding media content of interest to the user, such as data related to media programs, media types (e.g., movies, series, television specials) and program types (e.g., drama, action) the user may prefer. In one example, these content preferences are automatically determined based on the recording-related media content information stored in recording-related media content information field 604 of data structure 600 and may be updated, on a continuous or periodic basis, by synchronizing with the data stored in field 604. In general, monitoring recording-related media content information provides an efficient and effective means for analyzing user recording preferences and behavior, such as the type of program the user likes to watch or the time of day the user is adapted to watch programs of his or her preferred type.

As illustrated in FIG. 7, data structure 700 also includes a display preference field 704 used to store preference data for personalizing the look and feel of a user's interactive guidance application provided to a user equipment device associated with a UMN. For example, the data stored in field 704 may be used to customize interactive guidance application displays and menus. Such data is adapted to provide preference information regarding display modes (e.g., full-screen or picture-in-picture), modules (e.g., favorites, recorded media programs, recommended media programs), menu presentation (e.g., scroll menus, selection arrows), and menu options, for example. Field 704 may also include information for personalizing a user's guidance application with skins, pictures, logs, colors, font type and size, and other display attributes. Such display preferences may be obtained from field 314 data structure 300 (FIG. 3) which transmits device-specific profile information to central data management system 400.

Again referring to FIG. 7, data structure 700 further includes a functional preference field 706 that stores information used by interactive program guides in performing automatic functions for the user. Functional preferences include, for example, user default preferences (e.g., identifying a default recording device), series passes, payment or account information, and other information used by the user to access media content. Such functional preferences may also be generated from the device-specific profile information stored in field 314 of data structure 300 (FIG. 3).

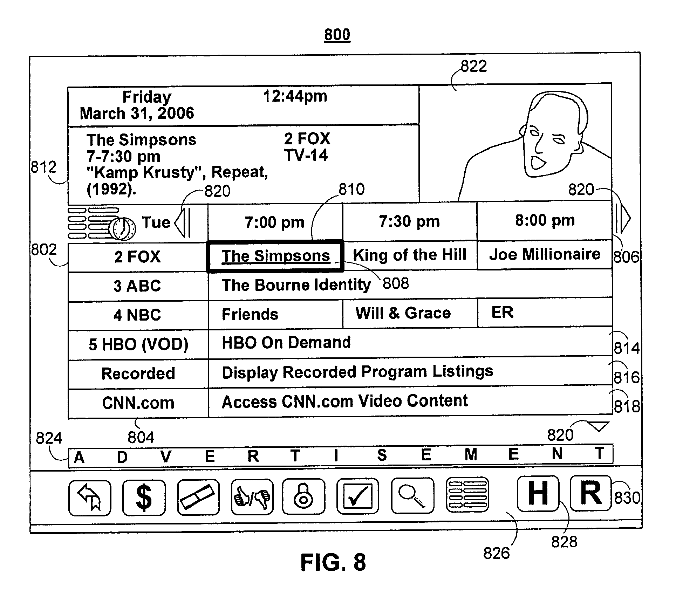

Exemplary media guidance applications are described below with references to FIGS. 8-12. In general, media guidance applications may be implemented on one or more user equipment devices in a user's media network and may be personalized based on the data stored in the central data management system.

One of the functions of a media guidance application is to provide media listings and media information to users. FIGS. 8-12 show illustrative display screens that may be used to provide media guidance, and in particular media listings. The display screens shown in FIGS. 8-12 may be implemented on any suitable device or platform. While the displays of FIGS. 8-12 are illustrated as full screen displays, they may also be fully or partially overlaid over media content being displayed. A user may indicate a desire to access media information by selecting a selectable option provided in a display screen (e.g., a menu option, a listings option, an icon, a hyperlink, etc.) or pressing a dedicated button (e.g., a GUIDE button) on a remote control or other user input interface or device. In response to the user's indication, the media guidance application may provide a display screen with media information organized in one of several ways, such as by time and channel in a grid, by time, by channel, by media type, by category (e.g., movies, sports, news, children, or other categories of programming), or other predefined, user-defined, or other organization criteria.

In particular, FIG. 8 shows illustrative grid program listings display 800 arranged by time and channel that also enables access to different types of media content in a single display. Display 800 may include grid 802 with: (1) a column of channel/media type identifiers 804, where each channel/media type identifier (which is a cell in the column) identifies a different channel or media type available; and (2) a row of time identifiers 806, where each time identifier (which is a cell in the row) identifies a time block of programming. Grid 802 also includes cells of program listings, such as program listing 808, where each listing provides the title of the program provided on the listing's associated channel and time. With a user input device, a user can select program listings by moving highlight region 810. Information relating to the program listing selected by highlight region 810 may be provided in program information region 812. Region 812 may include, for example, the program title, the program description, the time the program is provided (if applicable), the channel the program is on (if applicable), the program's rating, and other desired information.

In addition to providing access to linear programming provided according to a schedule, the media guidance application also provides access to non-linear programming which is not provided according to a schedule. Non-linear programming may include content from different media sources including on-demand media content (e.g., VoD), Internet content (e.g., streaming media, downloadable media, etc.), locally stored media content (e.g., video content stored on a digital video recorder (DVR), digital video disc (DVD), video cassette, compact disc (CD), etc.), or other time-insensitive media content. On-demand content may include both movies and original media content provided by a particular media provider (e.g., HBO On Demand providing "The Sopranos" and "Curb Your Enthusiasm"). HBO ON DEMAND is a service mark owned by Time Warner Company L.P. et al. and THE SOPRANOS and CURB YOUR ENTHUSIASM are trademarks owned by the Home Box Office, Inc. Internet content may include web events, such as a chat session or Webcast, or content available on-demand as streaming media or downloadable media through an Internet web site or other Internet access (e.g. FTP).

Grid 802 may provide listings for non-linear programming including on-demand listing 814, recorded media listing 816, and Internet content listing 818. A display combining listings for content from different types of media sources is sometimes referred to as a "mixed-media" display. The various permutations of the types of listings that may be displayed that are different than display 800 may be based on user selection or guidance application definition (e.g., a display of only recorded and broadcast listings, only on-demand and broadcast listings, etc.). As illustrated, listings 814, 816, and 818 are shown as spanning the entire time block displayed in grid 802 to indicate that selection of these listings may provide access to a display dedicated to on-demand listings, recorded listings, or Internet listings, respectively. In other embodiments, listings for these media types may be included directly in grid 802. Additional listings may be displayed in response to the user selecting one of the navigational icons 820. (Pressing an arrow key on a user input device may affect the display in a similar manner as selecting navigational icons 820.)

Display 800 may also include video region 822, advertisement 824, and options region 826. Video region 822 may allow the user to view and/or preview programs that are currently available, will be available, or were available to the user. The content of video region 822 may correspond to, or be independent from, one of the listings displayed in grid 802. Grid displays including a video region are sometimes referred to as picture-in-guide (PIG) displays. PIG displays and their functionalities are described in greater detail in Satterfield et al. U.S. Patent No. 6,564,378, issued May 13, 2003 and Yuen et al. U.S. Patent No. 6,239,794, issued May 29, 2001, which are hereby incorporated by reference herein in their entireties. PIG displays may be included in other media guidance application display screens of the present invention.

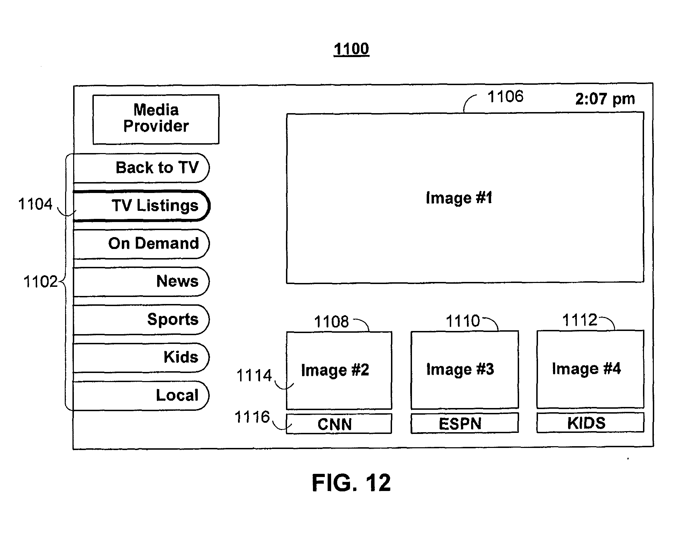

Advertisement 824 may provide an advertisement for media content that, depending on a viewer's access rights (e.g., for subscription programming), is currently available for viewing, will be available for viewing in the future, or may never become available for viewing, and may correspond to or be unrelated to one or more of the media listings in grid 802. Advertisement 824 may also be for products or services related or unrelated to the media content displayed in grid 802. Advertisement 824 may be selectable and provide further information about media content, provide information about a product or a service, enable purchasing of media content, a product, or a service, provide media content relating to the advertisement, etc. Advertisement 824 may be targeted based on a user's profile/preferences, monitored user activity, the type of display provided, or on other suitable targeted advertisement bases. In certain implementations, targeted advertisements are provided to a user via advertisement region 824 based on user profile information stored in field 606 of UMN information data structure 600 (FIG. 6). In particular, field 606 is associated with a profile information data structure 700, as shown in FIG. 7, that includes field 702 for storing user content preferences determined from recording-related actions of the user, field 704 for storing display preferences of the user and field 706 for storing function preferences of the user. Technical details regarding how targeted advertisements are provided to a media guidance application implemented on a user equipment device are described below with reference to FIGS. 12-15.

While advertisement 824 is shown as rectangular or banner shaped, advertisements may be provided in any suitable size, shape, and location in a guidance application display. For example, advertisement 824 may be provided as a rectangular shape that is horizontally adjacent to grid 802. This is sometimes referred to as a panel advertisement. In addition, advertisements may be overlaid over media content or a guidance application display or embedded within a display. Advertisements may also include text, images, rotating images, video clips, or other types of media content. Advertisements may be stored in the user equipment with the guidance application, in a database connected to the user equipment, in a remote location (including streaming media servers), or on other storage means or a combination of these locations. Providing advertisements in a media guidance application is discussed in greater detail in, for example, Knudson et al., U.S. Patent Application No. 10/347,673, filed January 17, 2003, Ward, III et al. U.S. Patent No. 6,756,997, issued June 29, 2004, and Schein et al. U.S. Patent No. 6,388,714, issued May 14, 2002, which are hereby incorporated by reference herein in their entireties. It will be appreciated that advertisements may be included in other media guidance application display screens of the present invention.

Options region 826 may allow the user to access different types of media content, media guidance application displays, and/or media guidance application features. Options region 826 may be part of display 800 (and other display screens of the present invention), or may be invoked by a user by selecting an on-screen option or pressing a dedicated or assignable button on a user input device. The selectable options within options region 826 may concern features related to program listings in grid 802 or may include options available from a main menu display. Features related to program listings may include searching for other air times or ways of receiving a program, recording a program, enabling series recording of a program, setting program and/or channel as a favorite, purchasing a program, or other features. Options available from a main menu display may include search options, VOD options, parental control options, access to various types of listing displays, subscribe to a premium service, edit a user's profile, access a browse overlay, or other options.

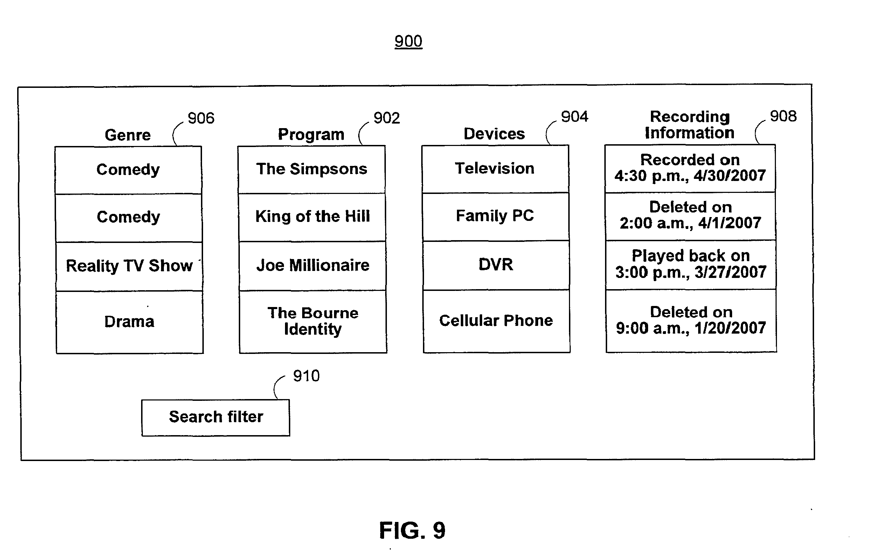

In one embodiment, options region 826 includes an icon 828 that allows a user to access the recording history information tracked by central data management system 400 of FIG. 4. For example, in response to the user's clicking on icon 828, the media guidance application evokes a display screen 900, as depicted in FIG. 9, that includes a list 902 of recording-related media content performed by the device on which the guidance application is implemented as well as by other devices sharing the same media network as the device. In particular, display screen 900 may include a list 904 of device identifiers corresponding to the recording-related media content in list 902, a list 906 of media genres corresponding to the media content, and a list 908 of recording-related actions associated with the media content. In certain practices, a search filter 910 is provided on display screen 900 that allows the user to filter the displayed recording history according to options such as media genre, program title, recording device or recording information.

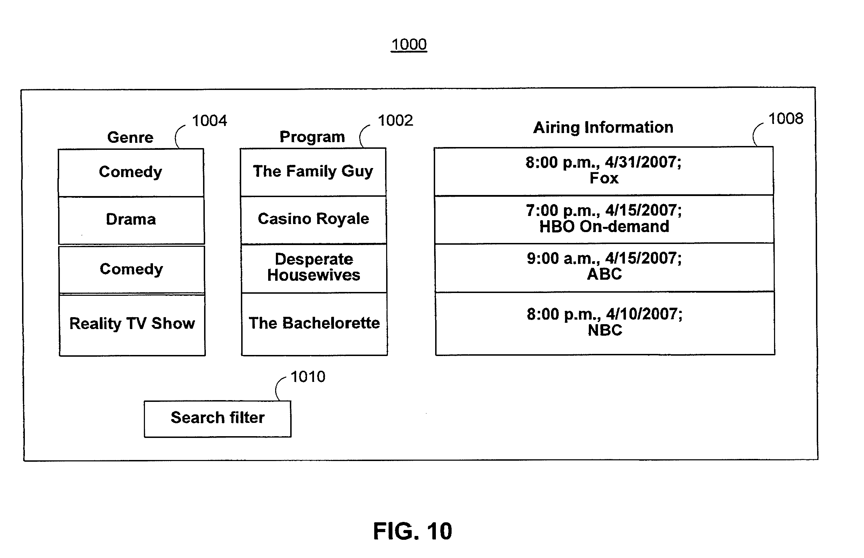

In one embodiment, options region 826 of FIG. 8 includes an icon 830 that allows a user to access media content that is recommended to the user based on the user profile information generated by central data management 400 of FIG. 4. For example, in response to the user's clicking of icon 830, the media guidance application evokes a display screen 1000 (FIG. 10) that includes a list of media content of potential interest to the user. As described above, the determination of such preferred content may be based on recording-related actions performed by all the user equipment devices in the user's media network. Display 1000 may also include a list 1004 of media genres under which the recommended media programs in list 1002 are categorized and a list 1008 of airing information corresponding to the media programs. In addition, a search filter 1010 is provided on display screen 1000 that allows the user to filter the recommended content according to options such as media genre, program title, or airing information such airtime or channel. In certain implementations, the recommended programs have not been recorded by the user on any of the user equipment devices. In addition to displaying media content recommendations on display screens such as screen 1000 of FIG. 10, media content recommendations may also be displayed in other formats, for example, as on-screen pop-up reminders, audio alerts, or reminders sent to other devices in the user's network (e.g., sending a text message reminder for a television show to a user's cellular phone).

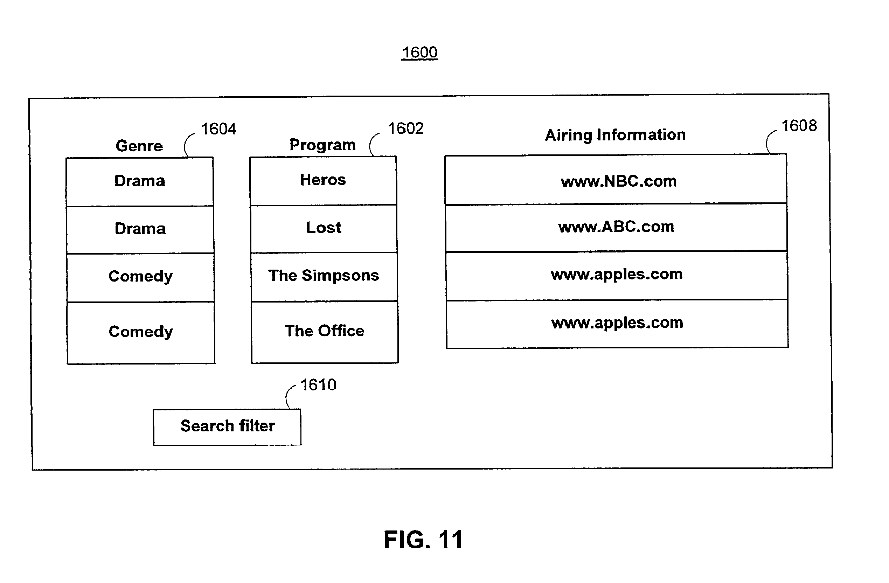

In certain implementations, the media content recommended to the user, for example, in display screen 1000, may be in a format compatible with the display capabilities of the suggested user equipment device on which the recommended content may be recorded. Such format personalization may be based on the device-specific information stored in the central data management system corresponding to the user equipment device, such as in user equipment device field 602 of data structure 600 (FIG. 6) or in display preference filed 704 of data structure 700 (FIG. 7). As illustrated in FIG. 10, display screen 1000 may be configured to recommend media content that is suitable for display on a television. Display screen 1600, as shown in FIG. 11, may be configured to recommend media content that is suitable for display on a computer having access to the Internet. In particular, display screen 1600 includes a list 1602 of on-line programs that may be of interest the user, a list 1604 of media genres under which the recommended media programs in list 1602 are categorized, and a list 1608 of websites from which corresponding media programs may be downloaded.

In another example, on a cellular phone, a summary video clip of a recommended program may be displayed in H.264 format, whereas, on a high-definition user equipment device, a complete recording of the same program may be displayed in high definition format. In yet another example, if a user records a program on the user's home DVR, the central data management system tracks this user preference and recommends a counterpart version of the same program to the user that is made exclusively for online viewing when the user accesses his or her media guidance application online. In addition, the system makes such recommendation based on the fact that the user has not recorded, downloaded or viewed the program online.

In certain implementations, same media content recommendations are provided to all the user equipment devices in the user's media network so that the media recommendations, reflective of the collective recording preferences of the user across the multiple devices, are available to the user regardless of which device the user is on. For example, if the central data management system determines that a user prefers to watch comedy programming on his or her television, then, in addition to recommending similar content to the user via the user's television, the same programming recommendation may be made on other user equipment devices such as on the user's personal computer or handheld device. In an alternative embodiment, the central data management system may recommend different content to different user equipment devices in the user media network. This is particularly useful when each member of the user's household has his or her own user equipment devices which are not shared with other members of the household.

Another display arrangement for providing media guidance is shown in FIG. 12. Video mosaic display 1100 includes selectable options 1102 for media content information organized based on media type, genre, and/or other organization criteria. In display 1100, television listings option 1104 is selected, thus providing listings 1106, 1108, 1110, and 1112 as broadcast program listings. Unlike the listings from FIG. 8, the listings in display 1100 are not limited to simple text (e.g., the program title) and icons to describe media. Rather, in display 1100 the listings may provide graphical images including cover art, still images from the media content, video clip previews, live video from the media content, or other types of media that indicate to a user the media content being described by the listing. Each of the graphical listings may also be accompanied by text to provide further information about the media content associated with the listing. For example, listing 1108 may include more than one portion, including media portion 1114 and text portion 1116. Media portion 1114 and/or text portion 886 may be selectable to view video in full-screen or to view program listings related to the video displayed in media portion 1114 (e.g., to view listings for the channel that the video is displayed on). In general, video mosaic display 1100 may be similarly personalized as display 800 of FIG. 8. For example, video mosaic display 1100 may include various icons for evoking screens that display cross-device recording history (e.g., recording history display screen 900 as shown in FIG. 9) or recommended media programs (e.g., media content recommendation screen 1000 as shown in FIG. 10 and screen 1600 as shown in FIG. 11).

Media guidance applications, such as the illustrative media guidance applications of FIGS. 8-12, may be implemented on multiple user equipment devices of a user's media network and may be personalized based on the user's preferences. A personalized media guidance application allows a user to customize displays and features to create a personalized "experience" with the media guidance application. This personalized experience may be created by allowing a user to input these customizations and/or by the media guidance application monitoring user activity to determine various user preferences. For example, the media guidance application may be automatically personalized based on the content, display and function preference information stored in profile information data structure 700 (FIG. 7) of central data management system 400 (FIG. 4). More particular, in certain embodiments, the media guidance application is personalized to a user equipment device according to the manner in which the user has consumed interactive applications on the same device in the past. Such usage-based personalization may be derived using the display preference data, for example, in field 704 of data structure 700 (FIG. 7). For instance, if the user equipment device is a portable device, short clips of a content item are delivered to the portable device because the user has historically viewed content on the portable device for short periods of time due to the limited battery life of the portable device.

In addition, users may access their personalized guidance application by logging in or otherwise identifying themselves to the guidance application. Customization of the media guidance application may be made in accordance with a user profile. The customizations may include varying presentation schemes (e.g., color scheme of displays, font size of text, etc.), aspects of media content listings displayed (e.g., only HDTV programming, user-specified broadcast channels based on favorite channel selections, re-ordering the display of channels, recommended media content, etc.), desired recording features (e.g., recording or series recordings for particular users, recording quality, etc.), parental control settings, and other desired customizations.

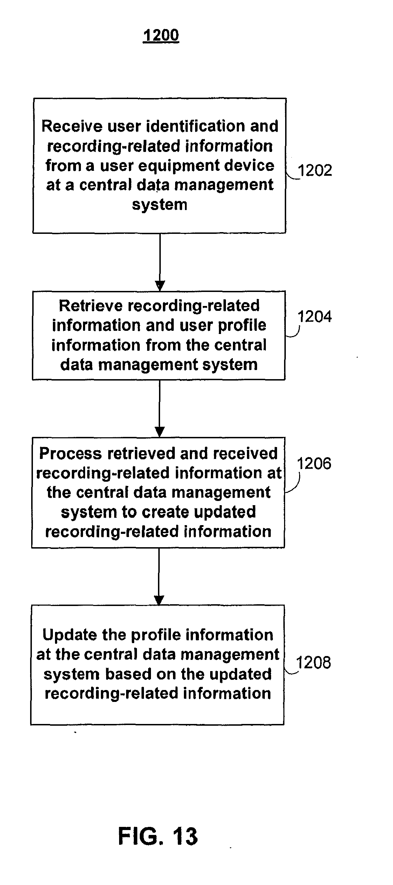

FIGS. 13-16 show exemplary flow diagrams illustrating various functions involved in the centralized management of recording-related information and user profile information. The flow diagram of FIG. 13 shows an exemplary process 1200 of a sequence of steps for providing recording-related data from a user equipment device to a central data management system implemented, for example, on a server. In particular, the sequence of steps in process 1200 may include transmitting user identification information and recording-related data from a user equipment device to a central data management system, updating recording-related information stored in the central data management system corresponding to the media network identified from the identification information, and updating user profile information stored in the central data management system.

In particular, process 1200 begins at step 1202 at which recording-related data and user identification information is transmitted from a user equipment device, such as device 202, 204 or 206 of FIG. 2, to a central data management system, such as central management system 224 of FIG. 2 or system 400 of FIG. 4. This transmission may be triggered by an occurrence of a recording-related event or transmitted at regular, preset intervals. FIG. 3 depicts an illustrative data structure 300 that may be used to transmit recording-related information from a user equipment device to the central data management system. In particular, field 302 of data structure 300 may include a username or other identifier used to uniquely identify a user or her media network. Field 302 may optionally include password or other information used to confirm a user's identity. The user identification information may be obtained from a user for the purpose of logging into the user's media network, logging into the use equipment device, or both.

At step 1204, the central data management system retrieves stored data corresponding to the transmitted user identification information, for example, from field 502 of data structure 500 (FIG. 5). Such data may provide monitored recording-related information and device-specific information associated with the user media network identified from step 1202. User media network information data structure 600, as shown in FIG. 6, provides an illustrative data structure that may be used to store such information. In particular, data structure 600 includes field 602 for providing user equipment device information, field 604 for providing recording-related media content information, and field 606 for providing profile information associated with the user media network. If there is no user media network associated with the user identification information received at step 1204, an indication of this fact may be transmitted from the central data management system to the user equipment device where the user may be prompted to enter new identification information or to create a new user media network.

At step 1206, the recording-related data transmitted from the user equipment device to the data management system and the monitoring media content information retrieved from the central data management system are processed by the data management system and merged to create updated device and media content information. Hence, the data management system is adapted to track, on an ongoing basis, the interactions of the user with various devices in the user's media network.

Process 1200 ends at step 1208, in which the user profile information in the central data management system is updated based on the updated device and media content information obtained from step 1206. In particular, data stored in content preference field 702, display preference field 704 or functional preference field 706 of data structure 700 (FIG. 7) is updated. In certain examples, profile updates involve incorporating device-specific profile information in filed 312 of data structure 300 (FIG. 3) with the profile information retrieved from profile field 606 of data structure 600 (FIG. 6). In general, user profile updates may involve identifying conflicting information in the received and retrieved information, and determining which parts of the conflicting information are most recent or most reliable. The updated user profile may contain the most up-to-date version of conflicting information, the most reliable version of the information, or a combination of the most up-to-date and the most reliable information.

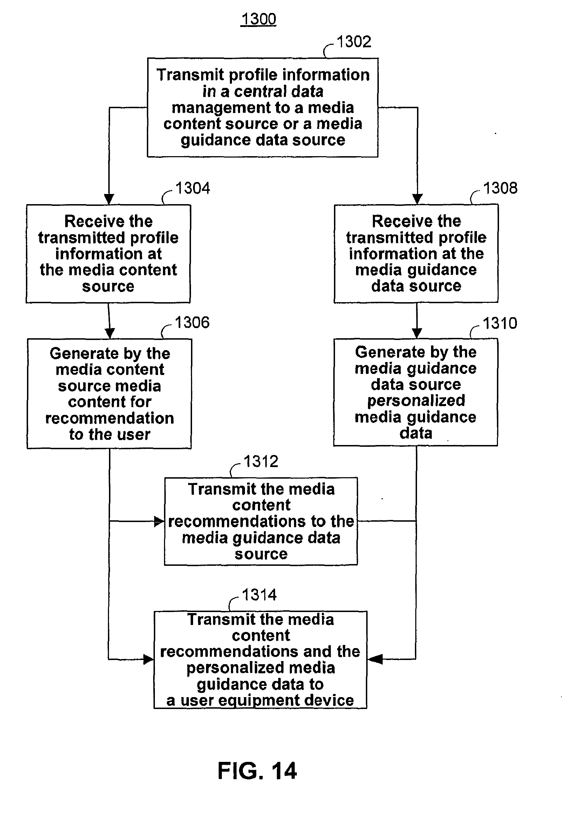

FIG. 14 shows illustrative process 1300 of a sequence of steps for personalizing a media guidance application delivered to a user equipment device of a user's media network. At step 1302, tracked user profile information, such as the profile information obtained at step 1208 of FIG. 13, is transmitted from the central data management system to a media content source, such as media content source 216 of FIG. 2, and a media guidance data source, such as media guidance data source 218 of FIG. 2. In particular, the profile information may be transmitted to either one of the sources via data structure 600 of FIG. 6 that includes content preference field 602, display preference field 604, and functional preference field 606. Upon receiving the profile information at step 1308, the media guidance data source may use the display preference information stored in field 604 and the functional preference information stored in field 606 of data structure 600 to generate media guidance data at step 1310 that is personalized according to the learned preferences of the user. In addition, upon receiving the profile information at step 1304, the media content source may use the content preference information stored in field 602 of data structure 600 to generate preferred media content at step 1306 for recommendation to the user. In certain practices, the media content recommendations may be transmitted from the media content source to the media guidance data source at step 1312 for incorporation into the personalized media guidance data. In certain practices, both the media content recommendations and the personalized guidance application are delivered to a user equipment device at step 1314. In one example, the media content recommendations may be additionally delivered to all other user equipment devices associated with the user's media network. In one example, different media guidance applications, personalized in accordance with device capabilities of different user equipment devices, may be delivered to the different devices in the user network. In one example, different media content, such as media content with different display format, may be recommended to different devices in accordance with the associated device capabilities.

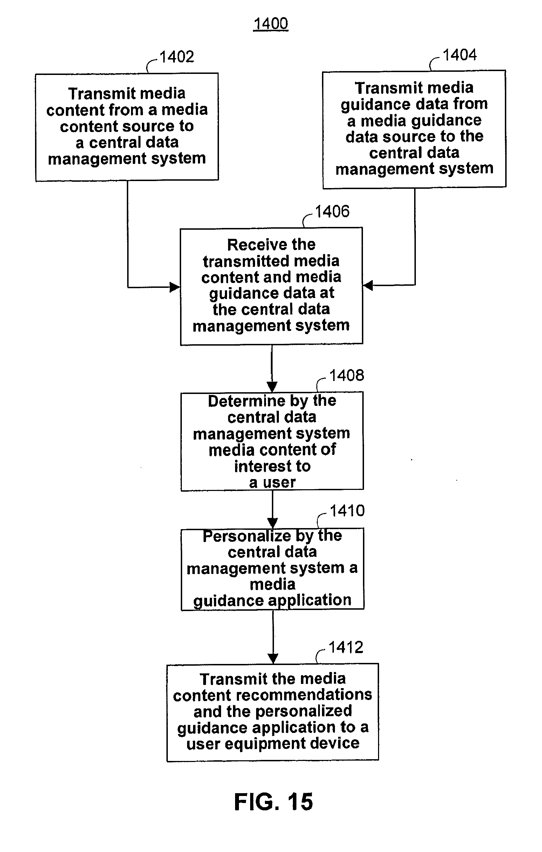

FIG. 15 shows another illustrative process 1400 of a sequence of steps for personalizing a media guidance application delivered to a user equipment device of a media network. In particular, a media content source, such as media content source 216 of FIG. 2, communicates with the central data management system at step 1402 to transmit media content information to the data management system. In addition, at step 1404, a media guidance data source, such as media guidance data source 218 of FIG. 2, transmits media guidance data to the data management system. Upon receiving the media content and media guidance data at step 1406, the data management system is able to determine media content of potential interest to a user of the media network. More specifically, the data management system selects media content of interest to the user at step 1408 based on querying the received media content from the media content source using, for example, the system's user profile information. At step 1410, the data management system also personalizes the media guidance data received from the media guidance source using the system's profile information and the media content recommendations made at step 1408. Subsequently, at step 1412, the recommended media content and the personalized media guidance application are delivered to the user equipment device.

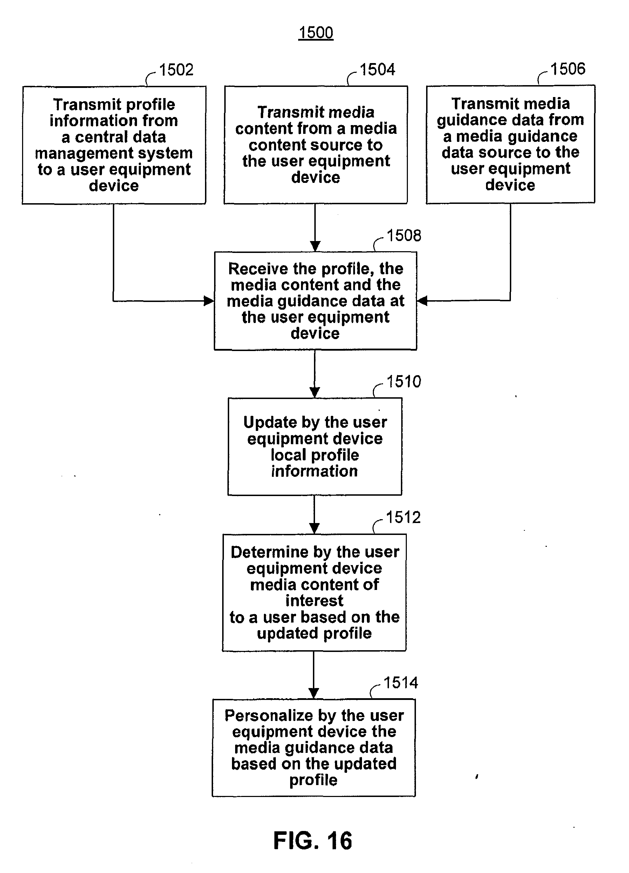

FIG. 16 shows yet another illustrative process 1500 of a sequence of steps for personalizing a media guidance application delivered to a user equipment device of a user's media network. In particular, the central data management system communicates directly with the user equipment device at step 1502 in order to transmit profile information stored in the system to the device. As described above, the transmitted profile information is generated based on recording-related actions performed by all user equipment devices of the media network. In addition, at step 1504, a media content source, such as media content source 216 of FIG. 2, transmits media content to the user equipment device. Furthermore, at step 1506, a media guidance data source, such as data source 218 of FIG. 2, transmits media guidance data to the user equipment device. Upon receiving information from all three sources at step 1508, the user equipment device is configured to update, at step 1510, local profile information stored in the device's memory with the received profile information from the central data management system. At step 1512, media content of interest to the user is determined by querying the transmitted media content from the media content source using the updated local profile. At step 1514, the updated local profile and the recommended media content from step 1512 are used by the user equipment device to personalize the media guidance data transmitted from the media guidance data source.

It will be understood that the foregoing is only illustrative of the principles of the present invention, and that various modifications can be made by those skilled in the art without departing from the scope and spirit of the present invention. The particular methods and circuit implementations shown herein are presented for purposes of illustration and not of limitation, and other constructions and embodiments can be used instead if desired.

The following embodiments are disclosed:
1. A method for personalizing an interactive media guidance application based on recording-related actions performed by at least one of a first user equipment device and a second user equipment device in a media network, comprising:
   receiving information from the first user equipment device indicating a first action associated with recording a program;
   receiving information from the second user equipment device indicating a second action associated with recording a program,
   generating a profile based on the received information from the first and second user equipment devices; and
   personalizing an interactive media guidance application implemented on the first and second user equipment devices based on the generated profile.
2. The method of item 1, wherein the first and second actions comprise at least one of ordering a recording of the program, scheduling a recording of the program, recording the program, and deleting a recording of the program.
3. The method of item 1, wherein the profile includes viewing preference information of a user and device configuration information of the first and second user equipment devices.
4. The method of item 3, wherein the device configuration information provides a status of
   each user equipment device comprising one of: available storage space on each device, current status of each device, and projected status of each device during a time of a user action.
5. The method of item 1, wherein the profile includes a listing of non-recording actions that occurred on at least one of the first and second user equipment devices.
6. The method of item 1, further comprising storing the profile in a central server remote from the first and second user equipment devices.
7. The method of item 1, further comprising storing the profile in a plurality of servers centrally accessible from the media network.
8. The method of item 1, wherein personalizing the interactive media guidance application includes providing a targeted advertisement.
9. The method of item 1, wherein personalizing the interactive media guidance application includes recommending a program.
10. The method of item 9, wherein the recommended program has not been watched on the first and second user equipment devices.
11. The method of item 9, further comprising displaying a listing of recommended programs on at least one of the first and second user equipment devices.
12. The method of item 1, further comprising personalizing the interactive media guidance application based on a type of each of the first and second user equipment devices
13. The method of item 12, wherein a type of each of the first and second user equipment devices comprises one of a personal computer, a mobile phone, an automotive entertainment system, a television, a set-top box, a DVR, and a portable media player.
14. The method of item 1, wherein the first user equipment device and the second user equipment device are of different device types.
15. The method of item 1, wherein the profile includes recording histories of programs recorded by the first user equipment device and the second user equipment device.
16. A media guidance system for personalizing an interactive media guidance application based on recording-related actions performed by at least one of a first user equipment device and a second user equipment device in a media network, comprising:
   a central data management system implemented at least partially on circuitry configured to:
      receive information from the first user equipment device indicating a first action associated with recording a program;
      receive information from the second user equipment device indicating a second action associated with recording a program,
      generate a profile based on the received information from the first and second user equipment devices; and
      personalize an interactive media guidance application implemented on the first and second user equipment devices based on the generated profile.
17. The system of item 16, wherein the first and second actions comprise at least one of ordering a recording of the program, scheduling a recording of the program, recording the program, and deleting a recording of the program.
18. The system of item 16, wherein the profile includes viewing preference information of a user and device configuration information of the first and second user equipment devices.
19. The system of item 18, wherein the device configuration information provides a status of each user equipment device comprising one of: available storage space on each device, current status of each device, and projected status of each device during a time of a user action.
20. The system of item 16, wherein the profile includes a listing of non-recording actions that occurred on at least one of the first and second user equipment devices.
21. The system of item 16, wherein the circuitry configured to generate a profile based on the received information from the first and second user equipment devices is configured to store the profile in a central server remote from the first and second user equipment devices.
22. The system of item 16, wherein the circuitry configured to generate a profile based on the received information from the first and second user equipment devices is configured to store the profile plurality of servers centrally accessible from the media network.
23. The system of item 16, wherein the circuitry configured to personalize the interactive media guidance application includes circuitry configured to provide a targeted advertisement.
24. The system of item 16, wherein the circuitry configured to personalize the interactive media guidance application includes circuitry configured to recommend a program.
25. The system of item 24, wherein the recommended program has not been watched on the first and second user equipment devices.
26. The system of item 24, wherein the recommended program is displayed on at least one of the first and second user equipment devices.
27. The system of item 16, wherein the circuitry configured to personalize the interactive media guidance application is configured to personalize the interactive media guidance application based on a type of each of the first and second user equipment devices
28. The system of item 27, wherein a type of each of the first and second user equipment devices comprises one of a personal computer, a mobile phone, an automotive entertainment system, a television, a set-top box, a DVR, and a portable media player.
29. The system of item 16, wherein the first user equipment device and the second user equipment device are of different device types.
30. The method of item 16, wherein the profile includes recording histories of programs recorded by the first user equipment device and the second user equipment device.

## Claims

1. A method for personalizing media content for display on a first user equipment device (100, 202, 204, 206) and a second user equipment device (100, 202, 204, 206), comprising:
determining recommended media content for a user based on a user profile (700);
generating for display on the first user equipment device (100, 202, 204, 206) a first version of the recommended media content, wherein the play length of the first version of the recommended media content is personalized based at least in part on the type of first user equipment device (100, 202, 204, 206);
generating for display on the second user equipment device (100, 202, 204, 206) a second version of the recommended media content, wherein the play length of the second version of the recommended media content is personalized based at least in part on the type of second user equipment device (100, 202, 204, 206);
wherein the first and second versions of the recommended media content have different play lengths.

2. The method of claim 1 wherein the type of each of the first and second user equipment devices (100, 202, 204, 206) comprises one of a personal computer, a mobile phone, a cellular phone, an automotive entertainment system, a television, a set-top box, a DVR, a portable media player and a high-definition user equipment device.

3. The method of claim 1 or claim 2 wherein the first and second versions of the recommended media content have different formats, wherein the format of the first version of the recommended media content is personalized based at least in part on the type of the first user equipment device (100, 202, 204, 206) and the format of the second version of the recommended media content is personalized based at least in part on the type of the second user equipment device (100, 202, 204, 206).

4. The method of any preceding claim wherein the first version of the recommended media content comprises a complete recording of the media content and the second version of the recommended media content comprises a summary of the same media content..

5. The method of any preceding claim wherein the recommended media content is recommended to a user based on user profile information generated by a central data management system (400).

6. The method of claim 5 wherein the recommended media content is recommended to the user based on recording-related actions performed by all of the user equipment devices in the user's media network (214).

7. The method of any preceding claim wherein the first version of the recommended media content comprises a complete recording of a recommended program and the second version of the recommended media content comprises a summary video clip of the same recommended program.

8. A media guidance system for personalizing media content for display on a first user equipment device (100, 202, 204, 206) and a second user equipment device (100, 202, 204, 206), comprising a central data management system implemented at least partially on circuitry, wherein the central data management system is configured to:
determine recommended media content for a user based on a user profile (700);
generate for display on the first user equipment device (100, 202, 204, 206) a first version of the recommended media content, wherein the play length of the first version of the recommended media content is personalized based at least in part on the type of first user equipment device (100, 202, 204, 206);
generate for display on the second user equipment device (100, 202, 204, 206) a second version of the recommended media content, wherein the play length of the second version of the recommended media content is personalized based at least in part on the type of second user equipment device (100, 202, 204, 206);
wherein the first and second versions of the recommended media content have different play lengths.

9. The system of claim 8 wherein the type of each of the first and second user equipment devices (100, 202, 204, 206) comprises one of a personal computer, a mobile phone, a cellular phone, an automotive entertainment system, a television, a set-top box, a DVR, a portable media player and a high-definition user equipment device.

10. The system of claim 8 or claim 9 wherein the first and second versions of the recommended media content have different formats, wherein the format of the first version of the recommended media content is personalized based at least in part on the type of the first user equipment device (100, 202, 204, 206) and the format of the second version of the recommended media content is personalized based at least in part on the type of the second user equipment device (100, 202, 204, 206).

11. The system of any of claims 8 to 10 wherein the first version of the recommended media content comprises a complete recording of the media content and the second version of the recommended media content comprises a summary of the same media content.

12. The system of any of claims 8 to 11 wherein the recommended media content is recommended to a user based on user profile information generated by a central data management system (400).

13. The system of claim 12 wherein the recommended media content is recommended to the user based on recording-related actions performed by all the user equipment devices in the user's media network (214).

14. The system of any of claims 8 to 13 wherein the first version of the recommended media content comprises a complete recording of a recommended program and the second version of the recommended media content comprises a summary video clip of the same recommended program.
